# EUROPEAN PATENT SPECIFICATION

(11) **EP 0 388 222 B1**
(45) Date of publication and mention of the grant of the patent: **18.05.1994**
(21) Application number: 90302839.7
(22) Date of filing: 16.03.1990
(51) Int. Cl.: F16B 7/18, E04B 1/58, B29C 65/56, F16B 19/10

(54) **Joining synthetic resin structural members**
Verbindung von Strukturelementen aus Kunstharz
Raccordement d'éléments structuraux en résine synthétique

(30) Priority: 16.03.1989 JP 64641/89
(43) Date of publication of application: 19.09.1990
(60) Divisional application: 92109777.0
(73) Proprietor: ISHIKAWAJIMA-HARIMA JUKOGYO KABUSHIKI KAISHA, Chiyoda-ku Tokyo-to (JP); NIPPON SHOKUBAI CO., LTD., Chuo-ku, Osaka-shi, Osaka-fu 541 (JP)
(72) Inventor: Kato, Kanji, Chiba-shi, Chiba-ken (JP); Mochizuki, Kesaaki, Inashiki-gun, Ibaraki-ken (JP); Hamamoto, Akira, Yokosuka-shi, Kanagawa-ken (JP); Oya, Hiroshi, Nakano-ku, Tokyo-to (JP); Ando, Kozo, Chuo-ku, Tokyo-to (JP); Namaritani, Kazuo, Nara-shi, Nara-ken (JP); Fujita, Kenichi, Takatsuki-shi, Osaka-fu (JP); Nagaoka, Futami, Ikoma-gun, Nara-ken (JP)
(74) Representative: Jennings, Nigel Robin

(56) References cited:
- DE-B- 2 515 237
- FR-A- 2 222 516
- US-A- 1 486 549
- US-A- 1 913 097
- US-A- 4 313 688

## Description

The present invention relates to a method of joining or connecting a structural member made of a synthetic resin, such as fibre reinforced plastics (FRP), to a further such member. The method is particularly for use with synthetic resin members which are used in place of conventional timber or steel members, especially in the main framework of a cooling tower so as to increase the corrosion resistance and to simplify the operational control.

Many structural members of synthetic resin have been used instead of timber and metal. However, such synthetic resin members have scarcely been used in circumstances where they are subject to a heavy load.

For instance, in the field of cooling towers for cooling warm water by direct contact with a large quantity of surrounding air, synthetic resin members have been used only partially for small cooling towers for air-conditioning systems or the like.

Generally, large cooling towers, as are used in various chemical industries, include a main or load-bearing framework of timber or steel. Though being typically composed of Douglas fir timber which has been subjected to a pressure-preservative treatment or steel members plated with zinc in a hot dip galvanizing process, the main framework still tends to be easily corroded since it is within the tower which has an atmosphere of extremely high temperature and of extremely high humidity.

A framework composed of timber or steel members typically begins to be corroded after about ten and seven to eight years, respectively, at and around the upper portion of the framework adjacent to a distribution system, and this necessitates repair of the tower.

As the corrosion spreads, corroded pieces of timber or rust particles disperse into the cooled water, which may result in deterioration of the performance of the cooling tower, such as by clogging of the strainer in the water-cooling system or an increase in the load to which the pump is subjected.

It is therefore proposed by the present applicants that the main framework be constructed from synthetic resins such as FRP which have a high degree of corrosion resistance, even in the corrosive atmosphere of a cooling tower. However, there are many points to be considered before using FRP, such as the buckling strength of the FRP members, the influence on the strength of the FRP of the absorption of water and the anti-weathering capability of the FRP members.

The present invention is concerned with overcoming the above and other problems encountered in conventional cooling towers and its object is to propose a method of joining or connecting a synthetic resin structural member to a further synthetic resin or other structural member in an easy and secure manner.

The inventors have made extensive studies of the anti-corrosion properties of structural materials to find that synthetic resins are employable for structural members, i.e. that FRP members may be used to constitute the main framework of a cooling tower.

According to the present invention a method of joining two synthetic resin structural members is characterised by the steps of placing a connector having a plurality of holes formed therein, e.g. predrilled holes, into engagement with the two members, drilling a hole in one of the members in a position corresponding to one of the holes in the connector and securing a blind rivet in the aligned holes and then repeating the drilling and riveting steps until the required number of rivets have been secured in both members, whereby the two members are then connected together by the connector. Due to the fact that the holes are formed one by one and after each hole is formed a rivet is secured or struck into it, the positioning of the blind rivet holes is very precise and ensures that, in use, the load is equally distributed between them and that the jointing work which is carried out on site is facilitated.

Further features and details of the present invention will be apparent from the following description of certain preferred embodiments which is given by way of example with reference to the accompanying diagrammatic drawings, in which:-
Figure 1 illustrates a first embodiment of the present invention in which two inclined synthetic hollow resin structural members are joined together;
Figure 2(a) is an elevation of a second embodiment of the present invention in which two hollow synthetic resin structural members are connected together axially;
Figure 2(b) is a sectional view thereof, on an enlarged scale;
Figure 3 illustrates an application of the present invention to assembling the main framework of a cooling tower;
Figure 4(a) is an enlarged elevation of an upper connector used in the framework shown in Figure 3;
Figure 4(b) illustrates, on an enlarged scale, a vertical connector, a bolt connector and a bracing connector used in the framework shown in Figure 3; and
Figure 4(c) is an enlarged elevation of a foundation connector used in the framework shown in Figure 3.

The same reference numerals are used to designate similar parts through the Figures.

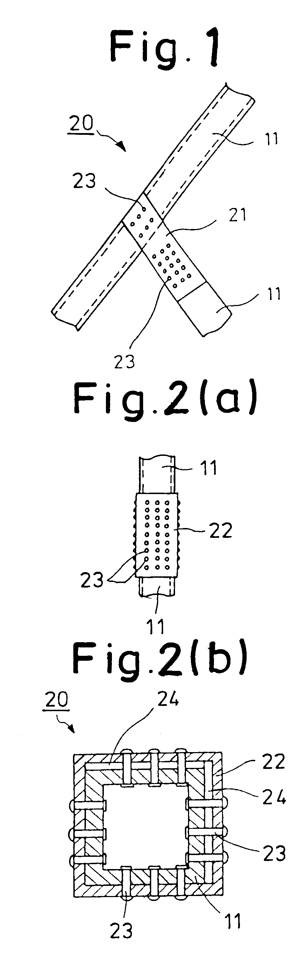

Figure 1 illustrates the joining of two inclined synthetic resin structural members 11 by means of a joint structure 20 including a connector 21 and blind rivets 23.

The connector 21, which is made of a metal or a synthetic resin, is in the form of a pair of plates. Alternatively, the connector 21 may be in the form of a hollow pipe of rectangular cross-section adapted to fit over one member 11 and having a pair of plate-like extensions spaced apart by a distance substantially equal to the width of the other member 11 so as to sandwich the latter. The pair of plates or plate-like extensions are cut off at their ends to define a predetermined angle of inclination of the connector 21 with the other member 11. The connector 21 has a plurality of previously drilled blind rivet holes.

In the joining process, the members 11 are abutted against each other at the predetermined angle and are sandwiched at the abutment region by the connector 21 in the form of two plates; alternatively, the one member 11 is fitted into the connector 21 in the form of a hollow rectangular pipe and the other member 11 is sandwiched by the plate-like extensions of the connector 21. Then, a plurality of blind rivet holes are drilled one at a time through the hollow members 11 in alignment with those previously drilled in the connector 21. After each hole is drilled through the members 11, a blind rivet 23 is struck into it. The blind rivet used is of conventional type comprising a flange and a shaft. By operation from the exterior of the connector 21, the latter can be securely joined to the structural members 11, thereby joining the structural members together.

Figure 2 illustrates the joining of two axial hollow synthetic resin structural members 11. A hollow rectangular connector 22 adapted to receive the hollow members 11 and made of, for example, metal or synthetic resin is used. Each side of the connector 22 has a plurality of previously drilled holes for blind rivets 23.

In the joining process, the structural members 11 are fitted into the connector 22 and are butted against each other. Spacers 24 are then fitted into any clearance between the connector 22 and the members 11. Then, a plurality of holes is drilled through the members 11 one at a time such that they are aligned with the holes in the connector 22. As each hole is drilled, a blind rivet is struck into it. The structural members 11 are thus joined together with the connector 22 surrounding them.

When forming the joint structure 20 with the connector 21 or 22 and the blind rivets 23, a plurality of holes is drilled successively through the members 11 and whenever a hole is drilled, a blind rivet 23 is struck into the newly drilled hole. The sequence of drilling a hole and striking a blind rivet into it is repeated. As a result, even when a large number of blind rivets is used, the rivet holes are drilled with a high degree of accuracy so that the load is uniformly distributed and received by the blind rivets 23.

If a plurality of bolts were used to join the synthetic resin structural members together, the maximum load which could be transmitted would be the same as that in the case in which a single bolt is used since the bolt holes drilled in the structural members and connector would have a diameter equal to that of the bolt plus 2 or 3 mm from the viewpoint of machining and installation accuracies.

The machining accuracy of the bolt holes in the event that a plurality of bolts is used might be enhanced by drilling bolt holes in the synthetic resin structural member when on site or in the field so as to be aligned with the previously formed holes on the connector. However, it is in fact virtually impossible to drill, on site, holes for insertion of a bolt in opposed walls of a hollow pipe with a high degree of accuracy.

However, in the case of a joint structure 20, the blind rivets 23 and the connector 21 or 22 do not necessitate the drilling of opposed holes in the hollow pipe and drilling of holes on site is effected only to make blind rivet holes in the pipe wall which will ensure a high degree of accuracy. As each new hole is drilled, a blind rivet is struck into it. This is repeated to join the structural members securely together. Such an operation can be carried out readily on site or in the field, ensuring a strong joint by the blind rivets 23 which receive the uniformly distributed load.

The joint strength can be freely adjusted by increasing or decreasing the number of the blind rivets 23 used.

When assembling the joint, there is no need to tighten a bolt at the hollow portion of the structural member so that the assembly is much facilitated.

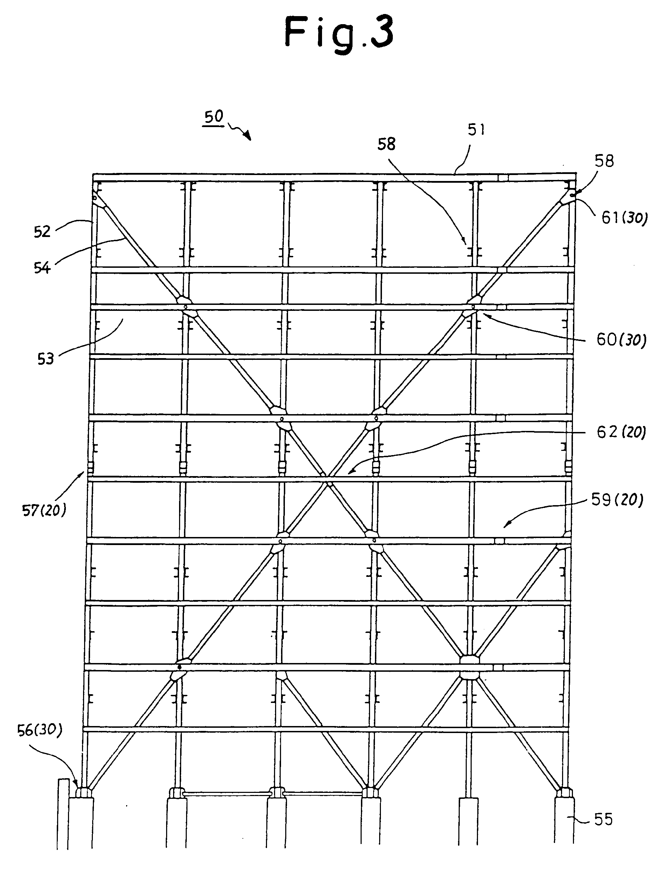

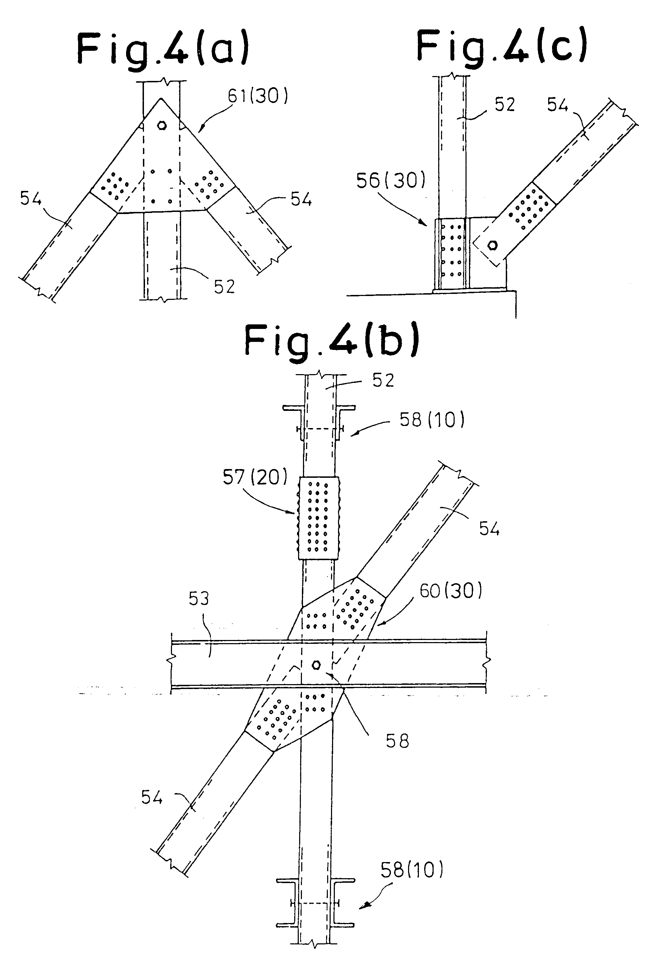

Figures 3 and 4 relate to the use of the method in accordance with the invention. Figure 4 shows joints 20 according to the invention and also joints 10,30 based on a different jointing method which is not the subject of the present invention. Figure 3 illustrates a cooling tower 50 having a main or load-bearing framework 51 composed of FRP members. The framework includes columns 52 in the form of rectangular hollow pipes made of FRP, transverse beams 53 in the form of shaped bars made of FRP and reinforcing inclined cross beams 54 in the form of rectangular hollow pipes made of FRP, similar to the columns 52.

These FRP members are preliminarily subjected to various tests and experiments in order to measure their buckling strength and the influence on their strength of the absorption of water. On the basis of the measured results, a selection is made as to material composition, cross-section and wall thickness of the members.

When assembling the framework 51, if the FRP members were connected with each other in a manner similar to that used with timber structural members, i.e. by means of connectors having pawls which are struck into the members, a satisfactory joint strength would not be attained. On the other hand, if the FRP members were drilled on site in a manner similar to that used with steel structural members to form a plurality of holes equal in pitch and size to the holes on the connector to be used and were then joined by bolting, it would be still difficult to ensure a satisfactory degree of joint strength.

In the case of an FRP hollow pipe, bolt holes would have to be drilled in opposite walls of the pipe since no bolt can be tightened at the hollow portion of the pipe. Such drilling of holes in the opposite walls of an FRP hollow pipe on site would be extremely difficult. Moreover, tightening of a bolt which passes through an FRP hollow pipe would tend to cause deformation of the pipe itself. Thus, the conventional connection systems are not practicable when connecting FRP members.

According to the present invention, joint structures 20 of the type described above are used, where appropriate, depending upon the shape of the members to be joined and the required joint strength. Blind rivets are struck through the connector into the wall of the hollow pipe to produce the joints.

The columns 52 are axially joined by vertical connectors 57 using joint structures 20 so as to provide a predetermined overall height of the tower 50. The tranverse beams 53 are joined by horizontal connectors 59 using the joint structures 20 so as to provide a predetermined overall width of the tower 50. The upper end of each beam 54 is joined to the associated column 52 by an upper connector 61 using the joint structure 20. The joints at intermediate points along the length of the beams 54 include intersection connectors 62 using the joint structure 20.

Alternative jointing methods are used for anchoring the lowermost columns 52 to the foundations 55 and the transverse beams 53 to the columns 52. The cross beams 54 are also connected axially together and to foundations 56 using alternative jointing methods.

As a result, the assembly of the cooling tower 50 and the joint work is much facilitated. The joint work efficiency is much improved since the use of FRP materials contributes to a decrease in weight of the structural members.

In the assembled cooling tower 50, the resistance to corrosion is remarkably improved thereby increasing the service life of the tower. Substantially no contaminants such as pieces of timber or rust particles are mixed into the cooled water and the operational control is simplified.

It will be understood that the pipes may be made of synthetic resins other than FRP and have any cross-section other than rectangular.

The connectors may be made not of metals but of synthetic resins such as FRP. Their shape and configuration may be changed as needs demand.

The synthetic resin structural members are not limited to FRP according to its narrow interpretation in which thermosetting plastics are used at the matrix but may be of reinforced plastics in a wider sense including FRTP (fibre reinforced thermo-plastics).

## Claims

1. A method of joining two synthetic resin structural members (11) characterised by the steps of placing a connector (21,22,31) having a plurality of holes formed therein into engagement with the two members (11), drilling a hole in one of the members (11) in a position corresponding to one of the holes in the connector and securing a blind rivet (23,33) in the aligned holes and repeating the drilling and riveting steps until the required number of rivets have been secured in both members.

2. A method as claimed in claim 1 characterised in that the connector (21,31) includes a pair of spaced parallel plates in which holes are formed and which are placed into engagement with at least one of the members (11).

3. A method as claimed in claim 1 characterised in that the connector (22) includes a hollow portion into which at least one of the members (11) is inserted.

4. A method as claimed in claim 1 characterised in that the connector (21,31) is in the form of a hollow pipe having a pair of parallel plate-like extensions at one end.

## Patentansprüche

1. Verfahren zum Verbinden zweier Strukturelemente (11) aus Kunstharz, gekennzeichnet durch die Schritte des Plazierens eines Verbinders (21,22,31), in dem eine Mehrzahl von Löchern ausgebildet sind, angreifend an den beiden Elementen (11), des Bohrens eines Loches in eines der Elemente (11) an einer Position, die einem der Löcher in dem Verbinder entspricht, und des Befestigens eines Blindniets (23,33) in den ausgerichteten Löchern, und das Wiederholen der Bohr- und Nietschritte, bis die erforderliche Anzahl von Nieten in beiden Elementen befestigt worden ist.

2. Verfahren nach Anspruch 1, dadurch gekennzeichnet, daß der Verbinder (21, 31) ein Paar voneinander beabstandeter paralleler Platten umfaßt, in denen Löcher ausgebildet sind und die angreifend an mindestens einem der Elemente (11) plaziert werden.

3. Verfahren nach Anspruch 1, dadurch gekennzeichnet, daß der Verbinder (22) einen hohlen Abschnitt umfaßt, in den wenigstens eines der Elemente (11) eingesetzt wird.

4. Verfahren nach Anspruch 1, dadurch gekennzeichnet, daß der Verbinder (21,31) die Form einer hohlen Röhre hat, die an einem Ende ein Paar paralleler, plattenähnlicher Fortsätze aufweist.

## Revendications

1. Procédé de jonction de deux éléments structurels de résine synthétique (11), caractérisé en ce que l'on place un connecteur (21, 22, 31) dans lequel sont forés une série de trous en contact avec les deux éléments (11), on fore un trou dans l'un des éléments (11) dans une position correspondant à l'un des trous du connecteur et l'on frappe un rivet borgne (23, 33) dans les trous alignés, et on répète ensuite les opérations de forage et de rivetage jusqu'à ce que le nombre de rivets requis aient été fixés dans les deux éléments.

2. Procédé selon la revendication 1, caractérisé en ce que le connecteur (21, 31) comprend une paire de plaques parallèles espacées dans lesquelles des trous sont forés et qui sont placées en contact avec au moins l'un des éléments (11).

3. Procédé selon la revendication 1, caractérisé en ce que le connecteur (22) comprend une partie creuse dans laquelle au moins un des éléments (11) est introduit.

4. Procédé selon la revendication 1, caractérisé en ce que le connecteur (21, 31) se présente sous la forme d'un tube creux ayant une paire de prolongements parallèles en forme de plaques à une extrémité.
